# EUROPEAN PATENT APPLICATION

(11) **EP 4 227 056 A1**
(43) Date of publication of application: **16.08.2023**
(21) Application number: 21891401.8
(22) Date of filing: 03.06.2021
(51) Int. Cl.: B29B 9/06

(54) **DIE PLATE COVER, DIE HEAD, EXTRUDER, AND METHOD FOR MANUFACTURING RESIN PELLET**

(30) Priority: 11.11.2020 JP 2020187883
(71) Applicant: The Japan Steel Works, Ltd., Tokyo 141-0032 (JP)
(72) Inventor: KAWANO, Hiroyuki, Tokyo 141-0032 (JP); HASHIMOTO, Tomonori, Tokyo 141-0032 (JP); UEDA, Naoki, Tokyo 141-0032 (JP); KURATA, Yoshihiro, Tokyo 141-0032 (JP)
(74) Representative: Manitz Finsterwald Patent- und Rechtsanwaltspartnerschaft mbB
(86) International application number: PCT/JP2021/021267
(87) International publication number: WO 2022/102152

(57) **Abstract**

A die plate cover 80 contains a vacuum layer as a heat insulating layer and is attached to a die plate 70 from which a molten resin is extruded. The die plate cover 80 attached to the die plate 70 covers a plurality of through holes 75a formed in a front surface 70f of the die plate 70 and bolts 76 inserted through the respective through holes 75a.

## Description

### TECHNICAL FIELD

The present invention relates to a die plate cover, a die head, an extruder, and a method of manufacturing resin pellets.

### BACKGROUND ART

An extruder configured to manufacture resin pellets by cutting a molten resin while extruding it has been known. The extruder conveys the molten resin while kneading it and extrudes it from a die head. Further, the extruder cuts the molten resin continuously extruded from the die head to a predetermined length. For example, Patent Document 1 (Japanese Unexamined Patent Application Publication No. 2019-188638) discloses an extruder including a screw configured to convey a molten resin while kneading it, a die head from which the molten resin is extruded, and cutting means configured to cut the molten resin extruded from the die head.

### RELATED ART DOCUMENTS

### PATENT DOCUMENTS

Patent Document 1: Japanese Unexamined Patent Application Publication No. 2019-188638

### SUMMARY OF THE INVENTION

### PROBLEMS TO BE SOLVED BY THE INVENTION

In order to manufacture good resin pellets, it is desirable to maintain the temperature of the die head from which the molten resin is extruded.

Other problems and novel features will be apparent from the descriptions of this specification and accompanying drawings.

### MEANS FOR SOLVING THE PROBLEM

According to one embodiment, a die plate cover contains a heat insulating layer and is attached to one surface of a die plate from which a molten resin is extruded. The die plate cover attached to the die plate is configured to cover a plurality of through holes formed in the one surface of the die plate and bolts inserted through the respective through holes.

### EFFECTS OF THE INVENTION

According to one embodiment, it is possible to maintain the temperature of the die head and manufacture good resin pellets.

### BRIEF DESCRIPTIONS OF THE DRAWINGS

FIG. 1 is a schematic diagram showing a resin pellet manufacturing system according to one embodiment;
FIG. 2 is a cross-sectional view schematically showing a structure of a die head and a cutting mechanism;
FIG. 3 is a perspective view of the die head;
FIG. 4 is an exploded perspective view of the die head;
FIG. 5A is a front view of a die plate cover;
FIG. 5B is a cross-sectional view of the die plate cover taken along the line A-A shown in FIG. 5A;
FIG. 6 is a perspective view of the die plate cover;
FIG. 7 is a perspective view showing a modification of the die plate cover;
FIG. 8A is a schematic diagram showing another modification of the die plate cover;
FIG. 8B is a schematic diagram showing another modification of the die plate cover;
FIG. 8C is a schematic diagram showing another modification of the die plate cover; and
FIG. 9 is a schematic diagram showing an example of a system in which the die head is used.

### DETAILED DESCRIPTION OF PREFERRED EMBODIMENTS

Hereinafter, one embodiment will be described in detail with reference to drawings. Note that the members and devices having the same or substantially the same function are denoted by the same reference characters throughout the drawings for describing the embodiment, and the repetitive description thereof will be omitted.

### <Resin Pellet Manufacturing System>

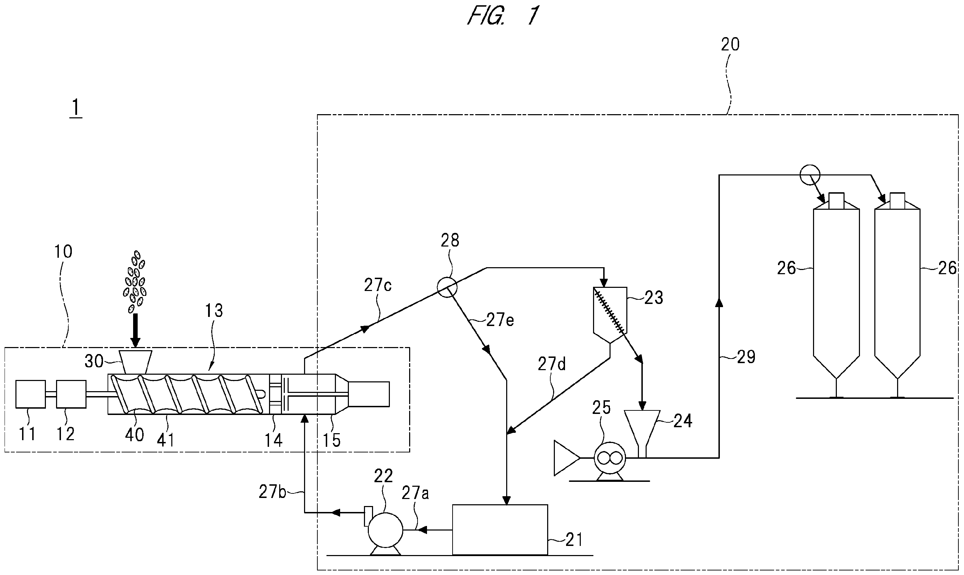

FIG. 1 is a schematic diagram showing a resin pellet manufacturing system including an extruder. A resin pellet manufacturing system 1 shown in FIG. 1 is composed of an extruder 10 as a main equipment and a plurality of auxiliary equipments 20. The extruder 10 includes a motor 11, a speed reducer 12, a kneading processor 13, a die head 14, and a cutting mechanism (pelletizer, cutter unit) 15. The auxiliary equipments 20 include a tank 21, a circulation pump 22, a dehydrator 23, a conveying hopper 24, a blower 25, and a pellet silo 26, and these equipments are connected by pipes as appropriate.

The tank 21 is connected to the circulation pump 22 via a pipe 27a, and the circulation pump 22 is connected to the extruder 10 (cutting mechanism 15) via a pipe 27b. Further, the dehydrator 23 is connected to the extruder 10 (cutting mechanism 15) via a pipe 27c and is connected also to the tank 21 via a pipe 27d. Namely, the pipes 27a, 27b, 27c, and 27d form a flow path that connects the tank 21, the circulation pump 22, the cutting mechanism 15, and the dehydrator 23. The tank 21 stores liquid. In this embodiment, the tank 21 stores water. The water in the tank 21 is circulated through the tank 21, the circulation pump 22, the cutting mechanism 15, the dehydrator 23, and the tank 21 in this order by the action of the circulation pump 22. However, a part of the water flowing from the cutting mechanism 15 to the dehydrator 23 is split at a branch portion 28 and returned to the tank 21 through a pipe 27e. The water circulating in the system functions as conveying water for conveying the resin pellets and functions also as cooling water. In the following description, the water circulating in the system may be referred to as "pellet conveying water" in some cases.

### <Method of Manufacturing Resin Pellet>

In the resin pellet manufacturing system 1 shown in FIG. 1, for example, the resin pellets are manufactured through the following process. First, a resin raw material is supplied to the extruder 10 (raw material supply step). More specifically, a resin raw material is fed to a raw material hopper 30 as a raw material inlet of the extruder 10. The resin raw material supplied to the extruder 10 is, for example, a thermoplastic resin. Additives and the like are added to the resin raw material as necessary.

The resin raw material fed to the raw material hopper 30 is supplied to the kneading processor 13. The resin raw material supplied to the kneading processor 13 is melted (melting step). Further, the molten resin raw material (molten resin) is conveyed while being kneaded (mixed) (kneading/conveying step). More specifically, the molten resin is sent forward while being kneaded by the rotation of a screw 40 provided in the kneading processor 13, and is supplied to the die head 14. Namely, in the kneading/conveying step, kneading and conveyance of the molten resin are simultaneously performed in parallel. Also, the resin raw material is melted by the heat generated by shear stress mainly caused by the rotation of the screw 40. Understandably, when melting the resin raw material, heat may be applied to the resin raw material by such means as a heater in some cases.

The molten resin supplied to the die head 14 passes through the die head 14 and is continuously extruded from the die head 14 (extrusion step). In other words, the molten resin is formed into a strand shape (string shape, rope shape) by passing through the die head 14.

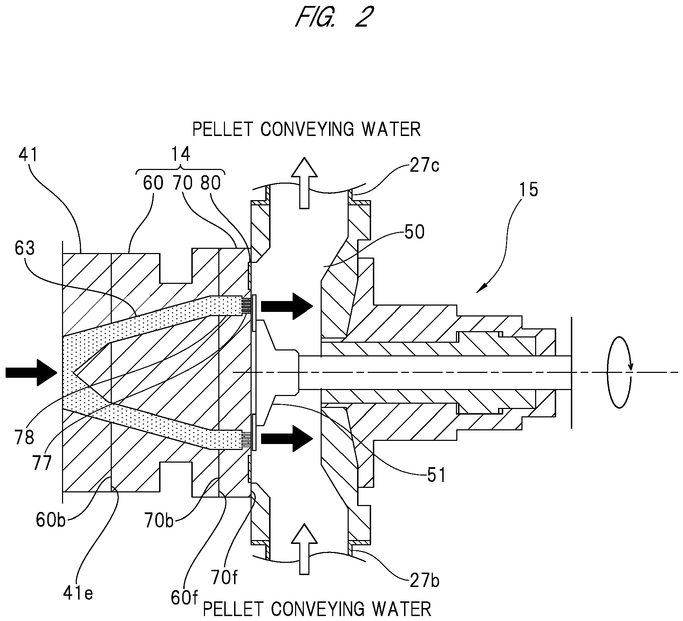

FIG. 2 is a cross-sectional view schematically showing the structure of the die head 14 and the cutting mechanism 15. A cutting process section (cutting process space) 50 of the cutting mechanism 15 is provided ahead of the die head 14. The molten resin that has passed through the die head 14 is extruded (discharged) into the cutting process section 50 of the cutting mechanism 15. In other words, the cutting process section 50 of the cutting mechanism 15 receives molten resin extruded from the die head 14.

The cutting process section 50 is provided on the flow path of the pellet conveying water. Therefore, when the pellet conveying water circulates in the resin pellet manufacturing system 1, the cutting process section 50 is filled with the pellet conveying water. Namely, the molten resin that has passed through the die head 14 is extruded into water (into the pellet conveying water).

The cutting mechanism 15 has a cutter head 51 that is rotationally driven in the cutting process section 50, and a plurality of cutter blades are attached to the cutter head 51. The strand-shaped molten resin extruded from the die head 14 to the cutting process section 50 is cut to a predetermined length by the cutter head 51 (cutter blade) and solidified in the water (in the pellet conveying water) (cutting/solidifying step, pelletizing step). In other words, the molten resin extruded into a strand shape is divided into pellets. As a result, resin pellets having a predetermined size (length and thickness) are manufactured. The technique of cutting molten resin in water is referred to as "underwater cutting" in some cases.

Referring to FIG. 1 again, a mixture (slurry) of the resin pellets and the pellet conveying water moves to the dehydrator 23 through the pipe 27c. In the dehydrator 23, the resin pellets and the pellet conveying water are separated (dehydration step). The pellet conveying water separated from the resin pellets flows (returns) to the tank 21 through the pipe 27d. On the other hand, the resin pellets from which the pellet conveying water has been separated (removed) move to the conveying hopper 24.

The conveying hopper 24 is connected to the pellet silo 26 via a pipe 29. The resin pellets moved to the conveying hopper 24 are sent to the pellet silo 26 through the pipe 29 by the airflow generated by the blower 25 (transfer step). The resin pellets sent to the pellet silo 26 are stored in the pellet silo 26 (storage step) . Namely, the resin pellets are air-conveyed from the conveying hopper 24 to the pellet silo 26. Also, the pellet silo 26 is a container that stores the air-conveyed resin pellets.

In the resin pellet manufacturing system 1, resin pellets are manufactured through the process described above. Understandably, the resin pellet manufacturing system 1 can be modified in various ways in accordance with the types and characteristics of the resin raw material and resin pellets. Also, the method of manufacturing resin pellets can be modified in various ways in accordance with the types and characteristics of the resin raw material and resin pellets. For example, a centrifugal dewatering dryer may be provided between the dehydrator 23 and the pellet silo 26 shown in FIG. 1. The centrifugal dewatering dryer removes from the resin pellets the water that has not been removed by the dehydrator 23. In this case, the method of manufacturing resin pellets includes a centrifugal dewatering step, a drying step, and the like. Also, the resin pellet manufacturing system 1 may be provided with sorting means such as a sieve for sorting the resin pellets based on size. In this case, the method of manufacturing resin pellets includes a sorting step.

### <Extruder>

Next, the extruder 10 shown in FIG. 1 will be described in more detail. As described above, the extruder 10 includes the motor 11, the speed reducer 12, the kneading processor 13, the die head 14, and the cutting mechanism (pelletizer, cutter unit) 15.

### <Kneading Processor>

The motor 11 is a drive source of the extruder 10. More specifically, the motor 11 is a drive source of the kneading processor 13. The rotational driving force output from the motor 11 is input to the screw 40 of the kneading processor 13 via the speed reducer 12 to rotate the screw 40. The speed reducer 12 reduces the speed of the rotational driving force output from the motor 11 and increases the torque of the rotational driving force input to the screw 40.

The screw 40 has a helical blade and is rotatably provided in a housing 41. The raw material hopper 30 is provided at one end of the housing 41 in a longitudinal direction, and the die head 14 is provided at the other end of the housing 41 in the longitudinal direction. Note that the longitudinal direction of the housing 41 coincides with an axial direction of the screw 40.

Behind the screw 40 shown in FIG. 1, another screw similar to the screw 40 is provided. The other screw is aligned parallel to the screw 40 and is rotated by the motor 11 in the same manner as the screw 40. Namely, the extruder 10 includes two screws parallel to each other and is generally referred to as a "twin-screw kneading extruder". In the following description, the screw 40 and the other screw aligned parallel to the screw 40 are collectively referred to as the "screw 40".

The resin raw material fed to the raw material hopper 30 is melted by the heat generated by shear stress mainly caused by the rotation of the screw 40. Understandably, the kneading processor 13 is provided with heating means (heater) for heating the resin raw material and adjusting the temperature of the resin material as necessary. The molten resin raw material (molten resin) is conveyed while being kneaded by the rotation of the screw 40. Specifically, the molten resin is conveyed by the rotation of the screw 40 from one end side of the housing 41 in the longitudinal direction where the raw material hopper 30 is provided (one end side of the screw 40 in the axial direction) to the other end side of the housing 41 in the longitudinal direction where the die head 14 is provided (the other end side of the screw 40 in the axial direction).

As described above, the molten resin is conveyed in the longitudinal direction of the housing 41 while being kneaded by the rotating screw 40. Namely, the longitudinal direction of the housing 41 (axial direction of the screw 40) is the conveying direction of the molten resin. Thus, in the following description, one end side of the housing 41 in the longitudinal direction where the raw material hopper 30 is provided (one end side of the screw 40 in the axial direction) is defined as an "upstream side" of the conveying direction, and the other end side of the housing 41 in the longitudinal direction where the die head 14 is provided (the other end side of the screw 40 in the axial direction) is defined as a "downstream side".

### <Cutting Mechanism>

As shown in FIG. 2, the cutting process section 50 is provided between the pipe 27b and the pipe 27c. Therefore, when the circulation pump 22 is actuated, the pellet conveying water flows into the cutting process section 50 through the pipe 27b, and the pellet conveying water flows out of the cutting process section 50 through the pipe 27c. As a result, the cutting process section 50 is filled with the pellet conveying water, and the molten resin that has passed through the die head 14 is extruded into the pellet conveying water that fills the cutting process section 50.

A plurality of cutter blades are attached to the cutter head 51 rotationally driven in the cutting process section 50. These cutter blades are attached to one surface of the cutter head 51 facing one surface of the die head 14 from which the molten resin is extruded. The plurality of cutter blades attached to one surface of the cutter head 51 are arranged at a predetermined pitch along the rotation direction of the cutter head 51. Therefore, the length of the resin pellets to be manufactured depends on the interval (facing distance) between the die head 14 and the cutter head 51, the rotational speed of the cutter head 51, the pitch of the cutter blades, and the like. Thus, the length of the resin pellets to be manufactured can be changed by adjusting the interval between the die head 14 and the cutter head 51, the rotational speed of the cutter head 51, the pitch of the cutter blades, and the like.

Note that the thickness of the resin pellets to be manufactured depends on the inner diameter of a nozzle 77 of the die plate 70, which will be described later. Therefore, the thickness of the resin pellets to be manufactured can be changed by using the die plate 70 having the nozzle 77 with a different inner diameter.

### <Die Head>

The die head 14 is attached to the end of the housing 41 in which the screw 40 is accommodated. More specifically, the die head 14 is attached to the downstream end of the housing 41.

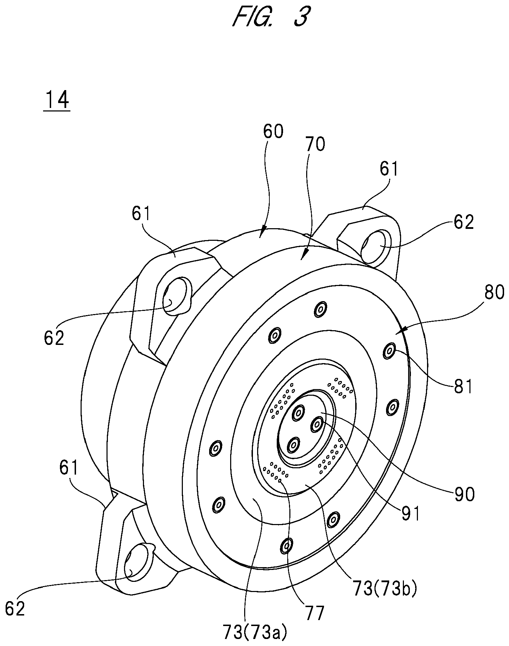

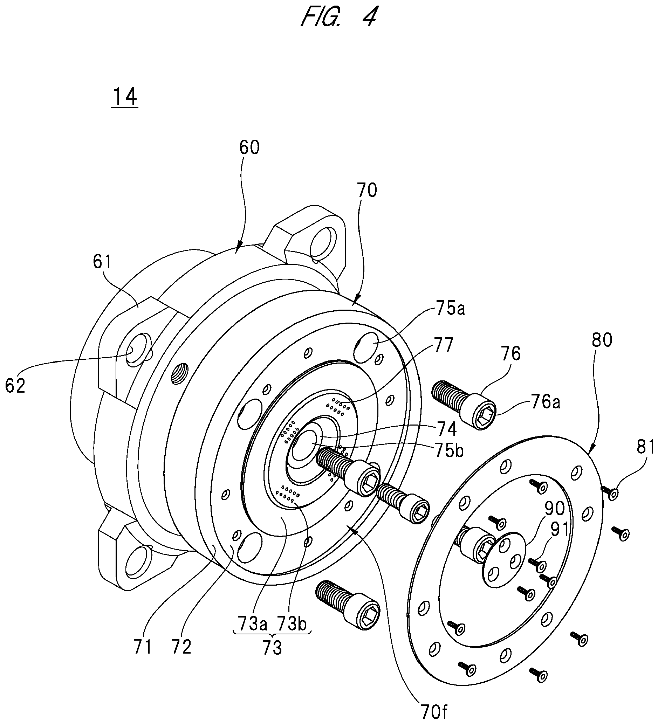

FIG. 3 is a perspective view of the die head 14, and FIG. 4 is an exploded perspective view of the die head. The die head 14 is composed of a die holder 60, a die plate 70, and a die plate cover 80. The die holder 60 is made of carbon steel, and the die plate 70 and the die plate cover 80 are made of stainless steel (SUS). Understandably, the materials of the die holder 60, the die plate 70, and the die plate cover 80 are not limited to specific materials, and suitable materials can be selected as appropriate. For example, a corrosion-resistant material that is resistant to corrosion is selected depending on the type of resin.

The die holder 60 is arranged on one side of the die plate 70 and the die plate cover 80 is arranged on the other side of the die plate 70. The die plate 70 is fixed to the die holder 60 and the die plate cover 80 is fixed to the die plate 70. Namely, the die holder 60, the die plate 70, and the die plate cover 80 are integrated.

### <Die Holder>

The die holder 60 has a cylindrical outer shape as a whole. Four fixing portions 61 are integrally formed on the side surface of the die holder 60. The four fixing portions 61 are arranged along the circumferential direction of the die holder 60. A through hole 62 is formed in each fixing portion 61. A rod for fixing the cutting mechanism (cutting process section 50) and the die holder 60 is inserted into each through hole 62. More specifically, a piston rod of a hydraulic cylinder provided in the cutting process section 50 is inserted into the through hole 62. By pulling back the piston rod inserted and retained in the through hole 62 into the cylinder tube, the cutting process section 50 and the die holder 60 are fixed to each other. From another point of view, the die plate 70 is sandwiched between the cutting process section 50 and the die holder 60.

As shown in FIG. 2, when the die head 14 has been fixed to the housing 41, one surface 60b of the die holder 60 abuts to a downstream end face 41e of the housing 41. In the following description, the one surface 60b of the die holder 60 abutting to the downstream end face 41e of the housing 41 is referred to as a "back surface 60b", and the other one surface 60f of the die holder 60 on an opposite side of the back surface 60b is referred to as a "front surface 60f" in some cases. Namely, when the die head 14 has been fixed to the housing 41, the downstream end face 41e of the housing 41 and the back surface 60b of the die holder 60 are in close contact with each other. Note that the die head 14 is fixed to the housing 41 by fixing the die holder 60 to the housing 41 by bolts.

### <Die Plate>

As shown in FIG. 3 and FIG. 4, the die plate 70 has a cylindrical outer shape as a whole and the same or substantially the same outer diameter as that of the die holder 60. As shown in FIG. 2, one surface 70b of the die plate 70 fixed to the die holder 60 abuts to the front surface 60f of the die holder 60. In the following description, the one surface 70b of the die plate 70 abutting to the front surface 60f of the die holder 60 is referred to as a "back surface 70b" and the other one surface of the die plate 70 on an opposite side of the back surface 70b is referred to as a "front surface 70f" in some cases. Namely, when the die plate 70 has been fixed to the die holder 60, the front surface 60f of the die holder 60 and the back surface 70b of the die plate 70 are in close contact with each other.

As shown in FIG. 4, a peripheral edge portion 71 is formed on the front surface 70f of the die plate 70 over the entire circumference of the die plate 70. Further, an outer annular region 72 is provided inside the peripheral edge portion 71, an inner annular region 73 is provided inside the outer annular region 72, and a central region 74 is provided inside the inner annular region 73. In other words, on the front surface 70f of the die plate 70, the peripheral edge portion 71, the outer annular region 72, the inner annular region 73, and the central region 74 are provided in this order from an outside to an inside in the radial direction. When the axial direction of the die head 14 is defined as the height direction, the outer annular region 72 is lower than the peripheral edge portion 71, and the inner annular region 73 is higher than the outer annular region 72. Also, the central region 74 is lower than the inner annular region 73.

A through hole 75a is formed in the outer annular region 72 of the die plate 70, and a through hole 75b is formed in the central region 74 of the die plate 70. The number and arrangement of the through holes 75a and 75b are changed as appropriate in accordance with the size of the die plate 70 and the like. In this embodiment, four through holes 75a are formed at equal intervals in the outer annular region 72, and one through hole 75b is formed in the central region 74. The four through holes 75a formed in the outer annular region 72 are arranged at equal intervals along the circumferential direction of the die plate 70. Namely, the fourth through holes 75a are arranged at intervals of 90 degrees. The through hole 75b formed in the central region 74 is arranged at the center of the die plate 70.

The die plate 70 is fixed to the die holder 60 by bolts 76 inserted through the through holes 75a and 75b. Namely, the die plate 70 is fixed to the die holder 60 by five bolts 76. Each bolt 76 is a bolt with hole (socket bolt, cap bolt) having a hole 76a in its head. More specifically, each bolt 76 is a bolt with hexagonal hole (hexagon socket bolt, hexagon cap bolt) having a hexagon hole 76a in its head.

A plurality of nozzles 77 are formed in the inner annular region 73 of the die plate 70. Here, the inner annular region 73 is further divided into two regions with different heights. More specifically, the inner annular region 73 is divided into a region 73a adjacent to the outer annular region 72 and higher by one step than the outer annular region 72 and a region 73b adjacent to the region 73a and higher by one step than the region 73a. The nozzles 77 are provided in the region 73b of the inner annular region 73. Four nozzle groups each including a plurality of nozzles 77 are provided in the region 73b. Understandably, the plurality of nozzles 77 do not have to be arranged to form groups. For example, the plurality of nozzles 77 may be arranged at regular intervals along the circumferential direction of the die plate 70.

As shown in FIG. 2, one end of each nozzle 77 communicates with a common plate flow path 78 formed inside the die plate 70, and the other end of each nozzle 77 is open on the front surface 70f of the die plate 70. Further, the plate flow path 78 communicating with the nozzle 77 communicates with a holder flow path 63 which is formed inside the die holder 60 and into which the molten resin conveyed by the screw 40 flows. As described above, a series of resin flow paths from the back surface 60b of the die holder 60 to the front surface 70f of the die plate 70 are provided in the die head 14. In the following description, one end of each nozzle 77 communicating with the plate flow path 78 is referred to as an "inlet", and the other end of each nozzle 77 opening on the front surface 70f of the die plate 70 is referred as an "outlet" in some cases.

The molten resin sent into the die head 14 by the rotation of the screw 40 flows into the die plate 70 via the die holder 60. More specifically, the molten resin flows through the holder flow path 63 in the die holder 60 into the plate flow path 78 in the die plate 70. The molten resin that has flown into the plate flow path 78 flows into each nozzle 77 from the inlet of each nozzle 77. The molten resin that has flown into the nozzle 77 passes through the nozzle 77 and flows out from the outlet of the nozzle 77. Namely, the molten resin is finally extruded into the cutting process section 50 of the cutting mechanism 15 from the outlet of each nozzle 77. As already described above, the molten resin is formed into a strand shape by passing through the nozzle 77.

### <Die Plate Cover>

As shown in FIG. 3 and FIG. 4, the die plate cover 80 has an annular outer shape as a whole and approximately the same shape and dimensions as those of the outer annular region 72 of the die plate 70. More specifically, the inner diameter of the die plate cover 80 is almost the same as the inner diameter of the outer annular region 72 of the die plate 70, and the outer diameter of die plate cover 80 is almost the same as the outer diameter of the outer annular region 72 of the die plate 70. In other words, the inner diameter of the die plate cover 80 is almost the same as the outer diameter of the inner annular region 73 of the die plate 70, and the outer diameter of the die plate cover 80 is almost the same as the inner diameter of the peripheral edge portion 71 of the die plate 70.

The die plate cover 80 is fixed to the die plate 70 by a plurality of flat head bolts 81. The die plate cover 80 fixed to the die plate 70 covers substantially the entire outer annular region 72 of the die plate 70. The surface of the die plate cover 80 fixed to the die plate 70 and the surfaces of the peripheral edge portion 71 and the region 73a of the inner annular region 73 of the die plate 70 are substantially at the same height. Namely, the die plate cover 80 has the thickness corresponding to the height difference between the outer annular region 72 and the peripheral edge portion 71 of the die plate 70. Also, the die plate cover 80 has the thickness corresponding to the height difference between the outer annular region 72 and the region 73a of the inner annular region 73 of the die plate 70. The thickness of the die plate cover 80 of this embodiment is approximately 3.0 mm. From another point of view, the height difference between the outer annular region 72 and the peripheral edge portion 71 is approximately 3.0 mm, and the height difference between the outer annular region 72 and the region 73a of the inner annular region 73 is also approximately 3.0 mm. Note that the region 73b of the inner annular region 73 where the nozzles 77 are provided is located at a slightly higher position than the surface of the die plate cover 80.

The die plate cover 80 collectively covers the four through holes 75a provided in the outer annular region 72 of the die plate 70 and the heads of the bolts 76 inserted through the through holes 75a. Further, the through hole 75b provided in the central region 74 and the head of the bolt 76 inserted through the through hole 75b are covered with a center cover 90. The thickness of the center cover 90 is approximately 6.0 mm. Also, the center cover 90 is fixed to the die plate 70 by flat head bolts 91 similar to the flat head bolts 81.

In this embodiment, the through holes 75a and 75b provided in the front surface 70f of the die plate 70 and the heads of the bolts 76 inserted through the through holes 75a and 75b are covered with the cover members (the die plate cover 80, the center cover 90). Therefore, the molten resin extruded from the nozzle 77 and the pellet conveying water in the cutting process section 50 do not enter the through holes 75a and 75b and the holes 76a of the bolts 76. In other words, the die plate cover 80 and the center cover 90 are cover plates that prevent or suppress the contact and entry of molten resin and water into the through holes 75a and 75b and the holes 76a of the bolts 76.

Referring to FIG. 2 again, the die plate cover 80 located at the forefront of the die head 14 faces the pellet conveying water in the cutting process section 50. Therefore, the heat of the die head 14 is likely to be transferred to the pellet conveying water via the die plate cover 80, and the temperature of the die head 14 is likely to be lowered. When the temperature of the die head 14 is lowered, the temperature of the molten resin passing through the die head 14 is lowered, and there is a risk that the fluidity of the molten resin is lowered or the molten resin is solidified. On the other hand, the decrease in fluidity and solidification of the molten resin in the die head 14 hinder the manufacture of good resin pellets. Therefore, it is desirable to maintain the temperature of the die head 14. In particular, the decrease in temperature of the die plate 70 in which the nozzles 77 are provided has a great influence on the quality of the resin pellets to be manufactured. Therefore, in order to manufacture good resin pellets, it is particularly desirable to maintain the temperature of the die plate 70. However, it is only the die plate cover 80 thinner than the die holder 60 and the die plate 70 that separates the die plate 70 and the pellet conveying water.

Note that the resin pellets may be manufactured without circulating water such as the pellet conveying water depending on the properties (especially melting point) of the resin raw material. In such a method of manufacturing resin pellets, the molten resin to be cut is extruded into the cutting process section 50 where no water is present. Namely, the molten resin is extruded into the air and is cut therein. In this case, the die plate cover 80 faces air rather than water such as the pellet conveying water. Therefore, heat dissipation from the die head 14 via the die plate cover 80 is smaller as compared with the case where the die plate cover 80 faces water. However, the heat of the die head 14 is still dissipated via the die plate cover 80. Therefore, even when manufacturing resin pellets without circulating water, it is desirable to maintain the temperature of the die head 14 in order to manufacture good resin pellets. The method of cutting the molten resin in water is sometimes referred to as an "underwater cutting", and the method of cutting the molten resin in the air is sometimes referred to as a "hot cutting".

As described above, regardless of whether the cutting method used for manufacturing the resin pellets is the underwater cutting or the hot cutting, it is desirable to maintain the temperature of the die head 14 in order to manufacture good resin pellets. However, a large amount of energy is required to maintain the temperature of the die head 14 under the condition that the heat of the die head 14 continues to be dissipated via the die plate cover 80. For example, it is necessary to set the higher heating temperature of the die head 14 in consideration of the decrease in temperature due to heat dissipation. In addition, it is necessary to set the higher heating temperature of the molten resin in consideration of the decrease in temperature in the die head 14. As a result, the running cost of the extruder 10 increases, and the manufacturing cost of resin pellets increases.

Therefore, in this embodiment, the die plate cover 80 is designed to have a function of maintaining the temperature of the die head 14. Specifically, the die plate cover 80 is made using a metal 3D printer and contains a heat insulating layer. In other words, the die plate cover 80 is a metal 3D printed product containing a heat insulating layer.

### <Heat Insulating Layer>

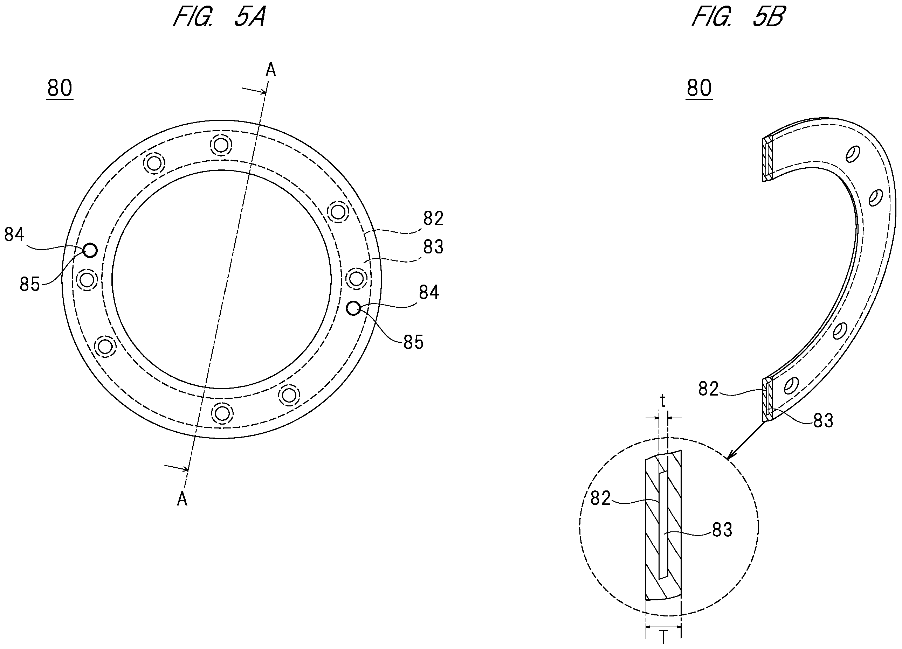

FIG. 5A is a front view of the die plate cover 80. FIG. 5B is a cross-sectional view of the die plate cover 80 taken along the line A-A shown in FIG. 5A. An internal space (gap) 82 having a pressure lower than the atmospheric pressure is provided in (inside) the die plate cover 80. In other words, a vacuum internal space 82 is provided inside the die plate cover 80. As a result, a vacuum layer 83 as a heat insulating layer is formed inside the die plate cover 80.

The internal space 82 is an annular space that follows the outer shape of the die plate cover 80 and is a continuous space. Also, the thickness (t) of the internal space 82 is approximately 0.5 mm. In other words, the vacuum layer 83 is an annular layer that follows the outer shape of the die plate cover 80 and is a continuous layer. Also, the thickness (t) of the vacuum layer 83 is approximately 0.5 mm. As already described above, the total thickness (T) of the die plate cover 80 is approximately 3.0 mm.

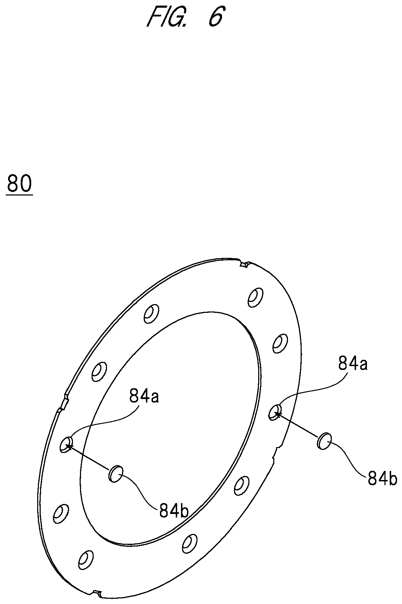

FIG. 6 is a perspective view of the die plate cover 80. A plurality of communication holes 84a communicating with the internal space 82 are provided in one surface of the die plate cover 80. In this embodiment, two communication holes 84a are provided. The two communication holes 84a are arranged at positions facing each other with the center of the die plate cover 80 interposed therebetween. In other words, the two communication holes 84a are arranged at positions separated by 180 degrees. Each communication hole 84a is airtightly closed by a sealing member 84b made of the same metal or the same kind of metal as the die plate cover 80. Namely, the sealing member 84b is a plug that closes the communication hole 84a.

The vacuum internal space 82 (vacuum layer 83) is formed by airtightly closing the communication hole 84a by the sealing member 84b under a vacuum environment. For example, the vacuum internal space 82 (vacuum layer 83) is formed by fitting and welding the sealing member 84b into the communication hole 84a in the vacuum chamber.

In this embodiment, the die plate cover 80 which is located at the forefront of the die head 14 and faces the water (pellet conveying water) and air in the cutting process section 50 has the heat insulating layer. Therefore, the amount of heat transferred from the die holder 60 and the die plate 70 to the water and air is reduced, and the decrease in temperature of the die head 14 is suppressed. Namely, the heat retention of the die head 14 is improved. As a result, the decrease in fluidity and solidification of the molten resin passing through the die head 14 are prevented or suppressed, and good resin pellets can be manufactured. Also, the energy required for maintaining the temperature of the die head 14 and the molten resin passing through the die head 14 at a predetermined temperature during operation of the resin pellet manufacturing system 1 can be reduced.

One of the start-up methods of the resin pellet manufacturing system 1 is the "dry start method". In the dry start method, extrusion and cutting of the molten resin are started before water such as pellet conveying water reaches the cutting process section 50. Therefore, the molten resin is temporarily cut in the air and in water afterward.

In the dry start method described above, when the water that has reached the cutting process section 50 comes into contact with the die head 14, the heat of the die head 14 is rapidly removed. However, in this embodiment, the die plate cover 80, with which the water that has reached the cutting process section 50 is in contact, is provided with a heat insulating layer, and thus heat transfer from the die head 14 to the water is suppressed.

Another start-up method of the resin pellet manufacturing system 1 is the "wet start method". In one aspect of the wet start method, after the cutting process section 50 is filled with water such as the pellet conveying water and the temperature of the die head 14 rises to a predetermined temperature, the extrusion and cutting of the molten resin are started. Further, in another aspect of the wet start method, after the cutting process section 50 is filled with water such as the pellet conveying water and before the temperature of the die head 14 rises to a predetermined temperature, the extrusion and cutting of the molten resin are started. Namely, in the wet start method, it is necessary to increase the temperature of the die head 14 in the state where the die head 14 faces the water in the cutting process section 50. In this embodiment, since the die plate cover 80 facing the water in the cutting process section 50 has a heat insulating layer, the temperature of the die head 14 can be increased to a predetermined temperature in a short period of time.

The thermal conductivity of water such as the pellet conveying water is 20 times or more that of air. Therefore, the improvement in heat retention of the die head 14 by the die plate cover 80 is particularly effective in the case of the underwater cutting. Also, a molten resin with a high melting point may lose its fluidity or solidify even by a slight temperature decrease. Therefore, the improvement in heat retention of the die head 14 by the die plate cover 80 is particularly effective in the case of processing a molten resin with a high melting point.

### <Modification of Die Plate Cover>

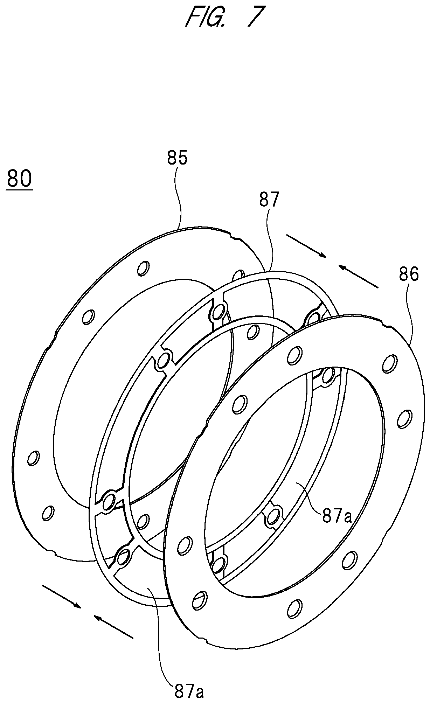

FIG. 7 is an exploded perspective view showing a modification of the die plate cover 80. The die plate cover 80 shown in FIG. 7 is composed of a plate member 85, a plate member 86, and a spacer member 87. The plate member 85 and the plate member 86 face each other. The spacer member 87 is interposed between the plate members 85 and 86 facing each other. Namely, the die plate cover 80 shown in FIG. 7 has a stacked structure (sandwich structure).

The spacer member 87 is formed in a frame shape having a plurality of openings 87a. When the plate member 85 and the plate member 86 are joined under a vacuum environment with the spacer member 87 interposed therebetween, the respective openings 87a are closed and the vacuum internal space 82 is formed. Namely, a plurality of independent vacuum internal spaces 82 are formed inside the die plate cover 80. As a result, the vacuum layer 83 as a heat insulating layer composed of a group of the plurality of vacuum internal spaces 82 is formed inside the die plate cover 80. The plate member 85 and the plate member 86 are joined by, for example, discharge plasma sintering or electron beam welding.

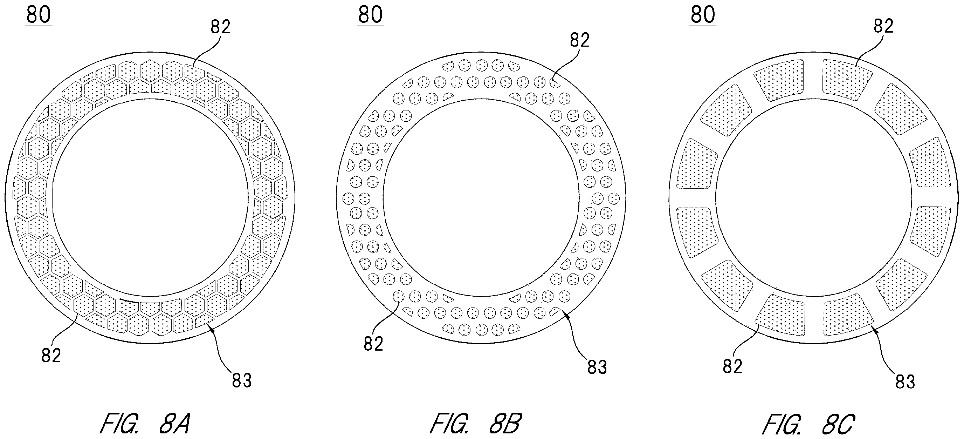

FIG. 8A, FIG. 8B, and FIG. 8C are schematic diagrams each showing another modification of the die plate cover 80. A larger number of vacuum internal spaces 82 than those in the die plate cover 80 shown in FIG. 7 are provided inside the die plate covers 80 shown in these figures. Understandably, the die plate cover 80 shown in each of FIG. 8A, FIG. 8B, and FIG. 8C is common with the die plate cover 80 shown in FIG. 7 in that a heat insulating layer (vacuum layer 83) composed of a group of the plurality of vacuum internal spaces 82 is formed.

The planar shape of the internal space 82 provided in the die plate cover 80 shown in FIG. 8A is a hexagonal shape or a shape corresponding to a part of a hexagon. The planar shape of the internal space 82 provided in the die plate cover 80 shown in FIG. 8B is a circular shape or a shape corresponding to a part of a circle. The planar shape of the internal space 82 provided in the die plate cover 80 shown in FIG. 8C is a substantially trapezoidal shape.

Note that the die plate cover 80 shown in each of FIG. 8A, FIG. 8B, and FIG. 8C can be realized by a metal 3D printer, and can be realized also by a stacked structure (sandwich structure).

A wall between two adjacent internal spaces 82 functions as a partition separating the internal spaces 82 and functions also as a rib that enhances the strength of the die plate cover 80. Therefore, forming the heat insulating layer (vacuum layer 83) by a group including a plurality of independent internal spaces 82 is advantageous in that it is possible to secure the volume of the heat insulating layer (vacuum layer 83) while avoiding the decrease in the strength of the die plate cover 80.

### <Other Usage Examples of Die Head>

In the above embodiment, the case where the die head is used in an extruder has been described. However, the application of the die head is not limited to the use in extruders.

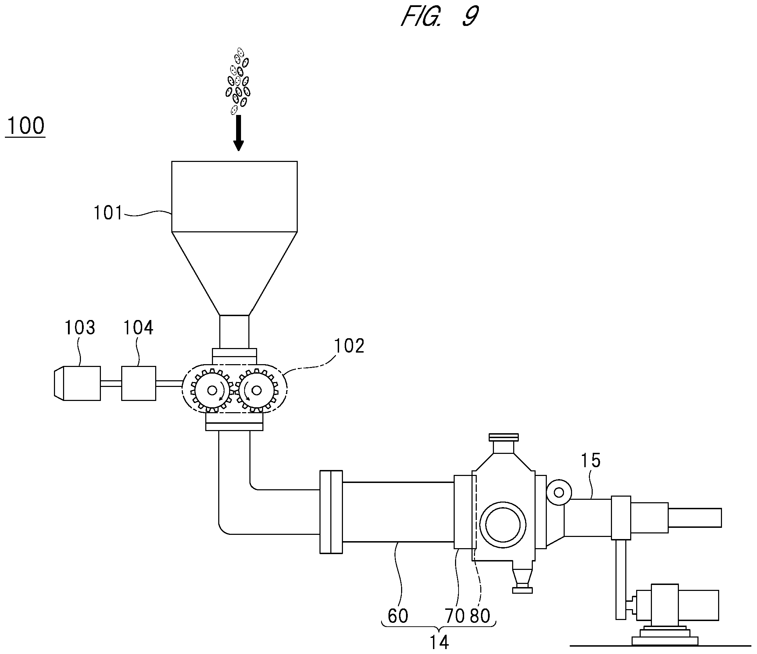

FIG. 9 is a schematic diagram showing an example of a system in which the die head 14 is used. An illustrated system 100 includes a polymerization tank 101, a gear pump 102, a motor 103, a speed reducer 104, and a cutting mechanism (pelletizer) 105. The die head 14 is arranged between the gear pump 102 and the cutting mechanism (pelletizer) 105.

The gear pump 102 supplies a resin raw material and the like in the polymerization tank 101 to the die head 14. The resin raw material and the like supplied to the die head 14 pass through the die holder 60 and the die plate 70 and is extruded from the nozzle 77 of the die plate 70 to the cutting mechanism (pelletizer) 105.

In the foregoing, the invention made by the inventors of this application has been specifically described based on the embodiment and example. However, it is needless to say that the present invention is not limited to the above-described embodiment and example and various modifications can be made within the range not departing from the gist thereof. For example, the thicknesses of the die plate cover and the heat insulating layer can be changed as appropriate. Understandably, the thickness of the die plate cover is preferably 3.0 mm or more and 10.0 mm or less in terms of strength and manufacturing cost. Further, when the thickness of the die plate cover is 3.0 mm or more and 10.0 mm or less, the thickness of the heat insulating layer is preferably 0.5 mm or more and 1.0 mm or less.

Instead of an internal space with a pressure lower than the atmospheric pressure (vacuum layer/low-pressure air layer), any one of an internal space with the same pressure as the atmospheric pressure (air layer), an internal space with a pressure higher than the atmospheric pressure (high-pressure air layer), an internal space filled with an inert gas (for example, nitrogen gas or argon gas) (gas layer), and an internal space filled with a heat insulating material (heat insulating material layer) can be used to form the heat insulating layer.

A heat insulating layer can be provided also in the cover plate other than the die plate cover arranged on the front surface of the die plate. For example, in addition to the die plate cover 80 shown in FIG. 3 and FIG. 4, the center cover 90 may also be provided with a heat insulating layer. In this case, the shape, structure, size, thickness, and others of the heat insulating layer of the die plate cover 80 and those of the heat insulating layer of the center cover 90 may be substantially the same or may be different from each other. For example, the thickness of the heat insulating layer (vacuum layer 83) of the die plate cover 80 shown in FIG. 3 and FIG. 4 is 0.5 mm, but the thickness of the heat insulating layer (vacuum layer) provided in the center cover 90 thicker than the die plate cover 80 can be, for example, 1.0 mm.

Also, two or more types of heat insulating layers may be provided in one die plate cover or center cover. For example, a vacuum layer and a gas layer may be provided in one die plate cover, a vacuum layer and a heat insulating material layer may be provided in one die plate cover, or a vacuum layer, a gas layer, and a heat insulating material layer may be provided in one die plate cover. Also, two or more heat insulating layers may be provided in one die plate cover. In this case, the lower heat insulating layer and the upper heat insulating layer may be the same type of heat insulating layers or different types of heat insulating layers.

In the above embodiment, the surface of the die plate cover 80 and the surfaces of the peripheral edge portion 71 and the region 73a of the inner annular region 73 of the die plate 70 have substantially the same height, but an embodiment in which these surfaces have different heights is also one of embodiments of the present invention.

Extruders include at least twin-screw extruders and single-screw extruders. The twin-screw extruders include at least a continuous intermeshed co-rotation twin-screw extruder and a continuous non-intermeshed counter-rotation twin-screw extruder.

### REFERENCE SIGNS LIST

- 1: resin pellet manufacturing system
- 10: extruder
- 11: motor
- 12: speed reducer
- 13: kneading processor
- 14: die head
- 15: cutting mechanism
- 20: auxiliary equipments
- 21: tank
- 22: circulation pump
- 23: dehydrator
- 24: conveying hopper
- 25: blower
- 26: pellet silo
- 27a, 27b, 27c, 27d, 27e, 29: pipe
- 28: branch portion
- 30: raw material hopper
- 40: screw
- 41: housing
- 41e: downstream end face
- 50: cutting process section
- 51: cutter head
- 60: die holder
- 60b: one surface (back surface)
- 60f: one surface (front surface)
- 61: fixing portion
- 62: through hole
- 63: holder flow path
- 70: die plate
- 70b: one surface (back surface)
- 70f: one surface (front surface)
- 71: peripheral edge portion
- 72: outer annular region
- 73: inner annular region
- 73a, 73b: region
- 74: central region
- 75a, 75b: through hole
- 76: bolt
- 76a: hole
- 77: nozzle
- 78: plate flow path
- 80: die plate cover
- 81, 91: flat head bolt
- 82: internal space
- 83: vacuum layer
- 84a: communication hole
- 84b: sealing member
- 85, 86: plate member
- 87: spacer member
- 87a: opening
- 90: center cover
- 100: system
- 101: polymerization tank
- 102: gear pump
- 103: motor
- 104: speed reducer

## Claims

1. A die plate cover attached to one surface of a die plate from which a molten resin is extruded,
the die plate cover having a shape that covers a plurality of through holes formed in the one surface of the die plate and bolts inserted through the respective through holes, and
the die plate cover containing a heat insulating layer.

2. The die plate cover according to claim 1,
wherein the heat insulating layer is formed of at least one of an internal space with a pressure lower than an atmospheric pressure, an internal space with the same pressure as the atmospheric pressure, an internal space with a pressure higher than the atmospheric pressure, an internal space filled with an inert gas, and an internal space filled with a heat insulating material.

3. The die plate cover according to claim 2,
wherein the heat insulating layer is formed of the internal space as a continuous space.

4. The die plate cover according to claim 2,
wherein the heat insulating layer is formed of a plurality of the internal spaces.

5. The die plate cover according to claim 2, comprising:
a communication hole communicating with the internal space; and
a sealing member configured to airtightly close the communication hole.

6. The die plate cover according to claim 2, comprising:
a first plate member and a second plate member facing each other; and
a spacer member interposed between the first plate member and the second plate member to form the internal space between the first plate member and the second plate member.

7. The die plate cover according to claim 1,
wherein a thickness of the die plate cover is 3.0 mm or more and 10.0 mm or less, and
wherein a thickness of the heat insulating layer is 0.5 mm or more and 1.0 mm or less.

8. A die head to which a molten resin is supplied, the die head comprising:
a die plate provided with a nozzle through which the supplied molten resin passes;
a die holder arranged on one side of the die plate; and
a die plate cover arranged on the other side of the die plate,
wherein a plurality of through holes through which bolts to fix the die plate to the die holder are inserted are formed in the die plate, and
wherein the die plate cover has a shape that covers the plurality of through holes formed in the die plate and the bolts inserted through the respective through holes, and the die plate cover contains a heat insulating layer.

9. The die head according to claim 8,
wherein the heat insulating layer contained in the die plate cover is formed of at least one of an internal space with a pressure lower than an atmospheric pressure, an internal space with the same pressure as the atmospheric pressure, an internal space with a pressure higher than the atmospheric pressure, an internal space filled with an inert gas, and an internal space filled with a heat insulating material.

10. An extruder configured to cut a molten resin while extruding it from a die head, the extruder comprising:
a screw configured to convey the molten resin while kneading it and supply it to the die head; and
a cutting mechanism configured to cut the molten resin extruded from the die head,
wherein the die head includes:
a die plate provided with a nozzle through which the molten resin supplied by the screw passes;
a die holder arranged on one side of the die plate; and
a die plate cover arranged on the other side of the die plate,
wherein a plurality of through holes through which bolts to fix the die plate to the die holder are inserted are formed in the die plate, and
wherein the die plate cover has a shape that covers the plurality of through holes formed in the die plate and the bolts inserted through the respective through holes, and the die plate cover contains a heat insulating layer.

11. The extruder according to claim 10,
wherein the heat insulating layer contained in the die plate cover of the die head is formed of at least one of an internal space with a pressure lower than an atmospheric pressure, an internal space with the same pressure as the atmospheric pressure, an internal space with a pressure higher than the atmospheric pressure, an internal space filled with an inert gas, and an internal space filled with a heat insulating material.

12. The extruder according to claim 10,
wherein the cutting mechanism includes:
a cutting process section configured to receive the molten resin extruded from the nozzle of the die head; and
a cutter head configured to be rotationally driven in the cutting process section, thereby cutting the molten resin extruded from the nozzle in the cutting process section.

13. The extruder according to claim 12,
wherein the cutter head cuts the molten resin in water supplied to the cutting process section, and
wherein the die plate cover of the die head faces the water in the cutting process section.

14. A method of manufacturing resin pellets comprising:
(a) extruding a molten resin from a die head; and
(b) cutting the molten resin extruded from the die head,
wherein the die head from which the molten resin is extruded in the (a) includes:
a die plate provided with a nozzle through which the supplied molten resin passes;
a die holder arranged on one side of the die plate; and
a die plate cover arranged on the other side of the die plate,
wherein a plurality of through holes through which bolts to fix the die plate to the die holder are inserted are formed in the die plate, and
wherein the die plate cover has a shape that covers the plurality of through holes formed in the die plate and the bolts inserted through the respective through holes, and the die plate cover contains a heat insulating layer.
